# EUROPEAN PATENT APPLICATION

(11) **EP 4 353 839 A1**
(43) Date of publication of application: **17.04.2024**
(21) Application number: 22824267.3
(22) Date of filing: 16.06.2022
(51) Int. Cl.: C21B 13/02

(54) **PRE-REDUCED PELLET PREPARATION APPARATUS AND METHOD BASED ON GRATE-ROTARY KILN**

(30) Priority: 18.06.2021 CN 202110676962
(71) Applicant: BAOSHAN IRON & STEEL CO., LTD., Shanghai 201900 (CN)
(72) Inventor: LI, Jian, Shanghai 201900 (CN); MAO, Xiaoming, Shanghai 201900 (CN); XIONG, Lin, Shanghai 201900 (CN); LIANG, Lisheng, Shanghai 201900 (CN); JIANG, Linhai, Shanghai 201900 (CN); YI, Lujie, Shanghai 201900 (CN); PENG, Xin, Shanghai 201900 (CN); CHEN, Shengfeng, Shanghai 201900 (CN)
(74) Representative: Maiwald GmbH
(86) International application number: PCT/CN2022/099079
(87) International publication number: WO 2022/262792

(57) **Abstract**

The present disclosure provides a pre-reduced pellet preparation device and method based on grate-rotary kiln. The pre-reduced pellet preparation device comprises a grate-rotary kiln pellet oxidation system and a hydrogen-based shaft furnace reduction system. In the pre-reduced pellet preparation method, a roasting process and a reduction process for an iron-containing green pellet are organically combined, and a pellet cooling process after roasting and a heating process before pellet reduction are eliminated; physical heat of a roasted pellet is used to satisfy heat required in the heating and reduction processes; the technical problems of a low hydrogen utilization rate and high energy consumption of pellets in oxidative roasting and direct reduction processes in traditional direct reduction processes are solved; a reduced pellet having a certain metallization rate is obtained; the prepared pre-reduced pellet is used as blast furnace burden, such that blast furnace fuel consumption and carbon emission can be significantly reduced; the method is a new, low-carbon, and green pre-reduced pellet preparation process.

## Description

### TECHNICAL FIELD

The present disclosure relates to a pre-treatment technology of ferrous metal metallurgical raw material in the field of iron and steel smelting, and in particular, relates to a pre-reduced pellet preparation device and method.

### BACKGROUND

Iron and steel production in China is mainly based on blast furnace-converter long-flow processes, and needs to use a large amount of fossil energy mainly based on coal due to the limitations of the process characteristics, thereby emitting a large amount of greenhouse gas; according to statistics, carbon dioxide emissions from the iron and steel production in China account for 15% of the total amount of social emissions, and thus, iron and steel production is an industry where greenhouse gas emissions are large;
as an important process step of the whole process, the energy consumption and carbon emission of blast furnace smelting and pre-treatment of raw materials before iron making account for 70-80% of the energy consumption and carbon emission of the whole process. Therefore, how to reduce the carbon emission of iron making process is the key to solve the green development of the iron and steel industry. With the enlargement of blast furnace and the advancement of operating technology, the thermal efficiency and gas utilization rate of blast furnaces are getting closer to the theoretical optimal values, and the space for emission reduction and consumption reduction in blast furnace smelting processes is becoming smaller and smaller; a hot spot of energy-saving research for ironmaking is increasingly focused on ore and coal agglomeration processes before ironmaking, and since the amount of pollutants, such as SO₂, NOx and dioxin, produced in iron ore sintering and agglomeration processes is 60%, 50% and 90% or above of those of the whole process, and CO₂ emission accounts for 15%. A pelletizing process, the pollutant production amount and energy consumption of which are only 20% and 50% of a sintering process, has made great progress in recent years.

According to Mysteel's calculation, the pellet production in China reached 225 million tons in 2020, mainly based on grate-rotary kiln processes, wherein pellets, as raw materials, are mainly used for blast furnaces and direct reduction furnaces, and are usually roasted to 1200-1300°C in an oxidizing atmosphere, cooled to normal temperature, then added to a blast furnace or a direct reduction furnace, and heated to 1500°C or 900°C while reducing to become molten iron or direct reduced iron;
in order to reduce the energy consumption of high-temperature roasting of pellets and increase the energy utilization efficiency, researchers have proposed various technical solutions.

Luo Hao *et al.* proposed a concept of shaft cooled kiln ventilation cooling instead of a conventional ring cooler or belt type machine in "Pellet grate-rotary kiln-shaft cooled kiln technical concept" (Metallurgical Equipment, 2020, Vol.5), considering that this solution has the characteristics of a high waste heat utilization rate and a small plant area.

China laid-open patent No. CN111380366A discloses a waste heat recycling system for sintered hot ore and pellet cooling machine, and proposes an idea of dividing a cooling machine into a high-temperature flue gas area, a medium-temperature flue gas area and a low-temperature flue gas area, and matching it with a residual heat boiler.

China laid-open patent No. CN112161260A discloses a sintered ore and pellet cooling and waste heat recovery method and boiler, and proposes using a solid heat exchange waste heat recovery device, wherein the boiler includes a solid-solid heat exchanger, the solid-solid heat exchanger including a solid-solid heat exchanger startup protection device, a primary evaporator and a secondary evaporator.

China utility model CN202465830U discloses a waste heat recovery system for pellet and sintered ore, which consists of a feeding device, a tank cooling bin, a heat-resistant dust collector, a heat exchanger, a normal-temperature dust collector and an induced draft fan.

In addition, using a pellet direct reduction process to prepare direct reduced iron for use in a converter or an electric furnace is also a technical direction to reduce carbon emission in iron and steel plants: China laid-open patent No. CN111534659A discloses a parallel heat storage gas-based shaft furnace and a method for producing direct reduced iron. Top gas, high-temperature reducing gas, intermediate gas and cooling gas of two shaft furnaces are communicated with each other. Iron-containing green pellets or lump ores are continuously fed into the two shaft furnaces, and the high-temperature reducing gas is periodically fed into the shaft furnaces under switching of a reversing valve group, and following the direction of gas flow, parallel flow heating and counter-current heat storage are simultaneously performed in the two shaft furnaces, and a reduction reaction is carried out to produce direct reduced iron and top gas.

Chinese patent CN104195278B discloses a process for producing iron powder by direct reduction of iron ore through a shaft furnace-rotary kiln. After iron concentrates are pelletized, green pellets are roasted by a shaft furnace, coal particles are added into a direct reduction furnace for reduction, and the reduced product is subjected to magnetic separation to obtain metallic iron powder.

China laid-open patent No. CN111910072A discloses a method for preparing and using pre-reduced fluxed pellets by taking steel slag as part of raw materials. The method includes screening the steel slag, taking out steel slag particles having a particle size of 2-4 mm as cores for pelletizing, grinding the rest of the steel slag into steel slag powder, pelletizing the steel slag powder together with fly ash, iron oxide red, iron concentrate powder and a composite binder, and carrying out drying, preheating and roasting to obtain finished pre-reduced fluxed pellets.

Chinese patent CN103261446B discloses a method and device for producing direct reduced iron by using a reducing gas source containing hydrogen and CO. The DRI (Direct Reduced Iron) is produced by using pellets and lump ores as iron raw materials, and using reducing gas containing highly oxidized CO and hydrogen (CO₂ and H₂O) and prepared by coal gasification. The method breaks through the limitations of using natural gas in previous gas-based direct reduction shaft furnaces.

China laid-open patent No. CN105408500A discloses a method for reducing iron oxide to metallic iron by using natural gas, wherein purified or raw natural gas, purified or contaminated coke oven gas and the like are converted into reducing gas/syngas suitable for direct reduction with minimal treatment or purification. Hydrocarbons and the like are converted into H₂ and CO through reduction. The method has the typical characteristics that iron oxide is added into a shaft furnace at normal temperature, gas is converted and heated to be reducing gas, and a high temperature required for reactions is provided, and in order to solve the problem of low utilization rate, purifying, heating, and circulating are performed for many times in a circulating way.

Chinese patent CN103898265B discloses a system device and method for reforming coke oven gas to directly reduce iron ore. Coke oven gas produced in a coking process is reformed and converted into hydrogen-rich reducing gas (H₂ and CO), and the hydrogen-rich reducing gas is then introduced into a shaft furnace to directly reduce iron ore. This solution can reduce carbon dioxide emission during iron ore reduction, and can better adapt to China's energy resource characteristics, unlike the direct reduction of iron by natural gas.

China laid-open patent No. CN110484672A discloses a method for producing direct reduced iron by a gas-based shaft furnace. According to the method for producing direct reduced iron by a gas-based shaft furnace, heat is absorbed by a Boudouad reaction between blast furnace undersize coke breeze and CO₂, so that the temperature inside the shaft furnace can be effectively reduced, and occurrence of thermal consolidation of furnace burden is reduced, and at the same time, the energy released from reduction is effectively used, the overall energy utilization rate is improved, and the produced CO increases the reduction potential in the furnace, and promotes the reduction of iron ore, which is beneficial to promote the application of a direct reduction technology of iron ore in a gas-based shaft furnace. The iron ore is pellet or lump ore, or a mixture of the two.

The above technical method has the problem of high carbon emission when using coal particles, and a gas-based direct reduction process has inherent thermodynamic limitations, mainly due to the large specific heat capacity of iron oxide. In addition, after reforming natural gas or coke oven gas, hydrogen is mainly used as a reducing agent, a large amount of heat is absorbed in the reduction process, and it is unlikely to maintain the reduction temperature, so it is necessary to heat and circulate the gas for many times. In the whole process, the hydrogen utilization rate is relatively low, usually around 30%, the gas-based direct reduction process is therefore difficult to promote worldwide, and has only developed in countries such as Middle East and South America where natural gas is cheap.

In view of the above situation, there is an urgent need in the industry to develop a new iron-containing green pellet sintering and reduction technique, which can solve the technical problems of low hydrogen reduction utilization rate during conventional direct reduction of pellets, and high energy consumption caused by repeated heating, such as heating (about 1250°C), cooling (about 25°C), and reheating (820-1050°C), of pellets during oxidative roasting and direct reduction.

### SUMMARY

In view of the above defects in the prior art, an object of the present disclosure is to provide a pre-reduced pellet preparation device and method based on a grate-rotary kiln. A roasting process and a reduction process for a pellet are organically combined by utilizing a grate-rotary kiln and a hydrogen-based shaft furnace, and a pellet cooling process after roasting and a heating process before pellet reduction are eliminated; physical heat of roasted pellets is used to meet the heat required for the heating and reduction processes; the technical problems of low hydrogen utilization rate and high energy consumption in oxidative roasting and direct reduction processes of pellets in traditional direct reduction processes are solved; reduced pellets having a certain metallization rate is obtained; the prepared pre-reduced pellets are used as blast furnace burden, such that fuel consumption and carbon emission of the blast furnace can be significantly reduced; the method is thus a new, low-carbon, and green pre-reduced pellet preparation process.

To achieve the above object, the present disclosure adopts the following technical solutions:
in a first aspect of the present disclosure, there is provided a pre-reduced pellet preparation device, including a grate-rotary kiln pellet oxidation system and a hydrogen-based shaft furnace reduction system; wherein
the grate-rotary kiln pellet oxidation system includes a grate system, and a rotary kiln system connected to the grate system; in the grate system, iron-containing green pellets are sequentially dried and preheated to obtain preheated pellets, and in the rotary kiln system, the preheated pellets are roasted at a temperature of 1170-1300°C to obtain roasted pellets; and
the hydrogen-based shaft furnace reduction system includes a hydrogen-based shaft furnace, a feeding system, a reducing gas system, a cooling system, and a discharging system; the feeding system is disposed at the upper part of the hydrogen-based shaft furnace, and the roasted pellets from the rotary kiln system are directly conveyed into the feeding system; the reducing gas system processes flue gas from the hydrogen-based shaft furnace, and provides reducing gas to the hydrogen-based shaft furnace; the roasted pellets from the feeding system are reduced in the hydrogen-based shaft furnace to obtain pre-reduced pellets; the cooling system cools the pre-reduced pellets in the hydrogen-based shaft furnace to obtain cooled pre-reduced pellets; and the discharging system is disposed at the bottom of the hydrogen-based shaft furnace, and discharges the cooled pre-reduced pellets.

Preferably, the grate system is provided with a drying section I, a drying section II, preheating section I and a preheating section II in sequence in a direction of movement of the iron-containing green pellets;
the preheating section II communicates with the rotary kiln system, and is connected with the drying section II through a first recuperation fan;
the preheating section I is connected with a tubular heat exchanger of the reducing gas system, and is connected with the rotary kiln system through a combustion fan, and is connected with the drying section I through a second recuperation fan; and
the drying section I and the drying section II are each connected to a bag dust collector through a main exhaust fan.

Preferably, the feeding system includes an upper hopper, a middle hopper and a lower hopper; valves are disposed between the upper hopper and the middle hopper, and between the middle hopper and the lower hopper; and/or
the reducing gas system includes a tubular heat exchanger, a residual heat boiler, a first scrubber, a circulating fan, and a pressurizing fan; the tubular heat exchanger is provided with a flue gas inlet, a flue gas outlet, an air inlet and an air outlet, the flue gas inlet is connected with a flue gas port at the top of the hydrogen-based shaft furnace, the flue gas outlet is connected with the residual heat boiler, the air inlet is connected with a fan, the air outlet is connected with the preheating section I of the grate system; an air outlet of the residual heat boiler is connected with an air inlet of the first scrubber; one end of the circulating fan is connected with an air outlet of the first scrubber, and the other end communicates with an annular tuyere in the middle part of the hydrogen-based shaft furnace; the pressurizing fan pressurizes reducing gas from the circulating fan; and/or
the cooling system includes an oxygenating combustion unit, a waste heat recovery unit, a second scrubber, and a cooling fan; the oxygenating combustion unit is connected with an air outlet at the lower part of the hydrogen-based shaft furnace; one end of the waste heat recovery unit is connected with the oxygenating combustion unit, and the other end is connected with an air inlet of the second scrubber; one end of the cooling fan is connected with an air outlet of the second scrubber, and the other end communicates with an air inlet at the lower part of the hydrogen-based shaft furnace; and the air outlet at the lower part of the hydrogen-based shaft furnace is arranged above the air inlet at the lower part of the hydrogen-based shaft furnace.

Preferably, the upper hopper is provided with an air duct; the middle hopper is provided with a pressure-equalizing device; and the lower hopper is provided with a universal distributor.

In a second aspect of the present disclosure, there is provided a pre-reduced pellet preparation method. The pre-reduced pellet preparation method uses the pre-reduced pellet preparation device according to the first aspect of the present disclosure to obtain roasted pellets having a temperature of 1170-1300°C in a grate-rotary kiln pellet oxidation system of the pre-reduced pellet preparation device, and the roasted pellets are then directly fed into a hydrogen-based shaft furnace reduction system of the pre-reduced pellet preparation device for reduction to obtain pre-reduced pellets.

Preferably, the pre-reduced pellet preparation method includes the steps of:
(1) blending bentonite and finely ground limestone/slaked lime into an iron ore raw material to obtain a mixed material, then mixing the mixed material with water, and performing pelletizing to obtain iron-containing green pellets;
(2) distributing the iron-containing green pellets into a grate system to form a material layer of iron-containing green pellets, sequentially subjecting the material layer of iron-containing green pellets to blast drying, exhaust drying, primary preheating, and secondary preheating to obtain preheated pellets, then feeding the preheated pellets into a rotary kiln system, and performing roasting at 1170-1300°C to obtain roasted pellets with a temperature of 1170-1300°C; and
(3) feeding the roasted pellets into a hydrogen-based shaft furnace reduction system, so that the roasted pellets undergo a reduction reaction with reducing gas, and then performing cooling treatment with cooling gas to obtain pre-reduced pellets.

Preferably, in the step (1), the iron ore raw material is selected from one or more of magnetite, hematite and limonite; and/or
the iron ore raw material has a Blaine specific surface area of 1500 cm²/g or more; and/or
the amount of the bentonite blended is 0.7-1.5 wt% of the iron ore raw material; and/or
the mixed material has a binary alkalinity of 0.3-0.5 or 0.8-1.2; and/or
the iron-containing green pellets have a particle size of 8-20 mm; and/or

in the step (2), in the grate system, the material layer of iron-containing green pellets has a height of 250-400 mm; and/or
the blast drying is carried out in drying section I of the grate system at a temperature of 170-240°C and an air speed of 0.8-1.4 m/s for 1.5-2.5 min; and/or
the exhaust drying is carried out in a drying section II of the grate system at a temperature of 300-400°C and an air speed of 0.8-1.4 m/s for 4-6 min; and/or
the primary preheating is carried out in a preheating section I of the grate system at a temperature of 600-800°C and an air speed of 0.8-1.4 m/s for 4-6 min; and/or
the secondary preheating is carried out in a preheating section II of the grate system at a temperature of 900-1100°C and an air speed of 0.8-1.4 m/s for 4-6 min; and/or
the fuel of the rotary kiln system includes natural gas, coke oven gas, pyrolysis gas, pyrolysis oil, biomass oil, or biomass carbon; and/or
the rotary kiln system utilizes hot air to support combustion, and the hot air is from a mixed gas composed of air and hot exhaust gas of the grate system; and/or
in the roasting process, the roasting temperature is controlled to be 1170-1300°C, and the roasting time is controlled to be 8-12 min; and/or
in the step (3), the pressure of the hydrogen-based shaft furnace of the hydrogen-based shaft furnace reduction system is 200-250 kPa; and/or
the reducing gas is pure hydrogen or coke oven gas; and/or
during the reduction reaction, the consumption amount of the reducing gas is 800-1200 m³/t, and the reduction reaction time is 40-100 min; and/or
the cooling gas includes nitrogen and natural gas; and/or
during the cooling treatment process, the cooling gas has a flow rate of 1200-1800 m³/t; and/or
the discharge temperature of the pre-reduced pellets is lower than 150°C; and
the metallization rate of the pre-reduced pellets is 40% or more.

Preferably, in the step (2), in the blast drying process, the blast drying temperature is 190-210°C, and the air speed is 0.9-1.2 m/s; and/or
in the exhaust drying process, the exhaust drying temperature is 330-350°C, and the air speed is 0.9-1.2 m/s; and/or
in the primary preheating process, the air speed is 0.9-1.2 m/s; and/or
in the secondary preheating process, the air speed is 0.9-1.2 m/s; and/or
in the step (3), the metallization rate of the pre-reduced pellets is 40-62%; and
the reducing gas is pure hydrogen, and during the reduction reaction, a hydrogen utilization rate reaches 50% or more.

Preferably, in the step (3), the reducing gas is pure hydrogen, and during the reduction reaction, the hydrogen utilization rate reaches 55% or more; and/or
the roasted pellets are conveyed into the feeding system of the hydrogen-based shaft furnace reduction system through a high-temperature-resistant tank, and are then distributed into the hydrogen-based shaft furnace of the hydrogen-based shaft furnace reduction system through the feeding system, and participate in the reduction reaction in the middle part of the hydrogen-based shaft furnace;
the reducing gas enters the hydrogen-based shaft furnace through the reducing gas system to participate in the reduction reaction, and flue gas after the reaction enters the reducing gas system from a flue gas outlet at the top of the hydrogen-based shaft furnace, and is subjected to heat exchange, waste heat recovery, and scrubbing, and then enters the middle part of the hydrogen-based shaft furnace to participate in a reduction reaction; and
the cooling gas enters the hydrogen-based shaft furnace through a cooling system to participate in cooling treatment, and a mixed gas having be treated enters the cooling system from an air outlet at the lower part of the hydrogen-based shaft furnace, and is subjected to oxygenating combustion, waste heat recovery, and scrubbing, and then enters the lower part of the hydrogen-based shaft furnace to participate in cooling treatment.

Preferably, in the step (3), distribution is performed in the feeding system as follows:
the roasted pellets are introduced into the feeding system, pass through an upper hopper, a middle hopper and a lower hopper of the feeding system in sequence, and then are distributed into the hydrogen-based shaft furnace through a universal distributor;
after the roasted pellets are charged into the upper hopper, steam or nitrogen is introduced to replace oxygen, such that the oxygen content within the upper hopper is 1% or less, a valve below the upper hopper is opened, so that the roasted pellets completely enter the middle hopper, and the valve below the upper hopper is closed, and a pressure equalization process is completed by using a gas having the same composition as that of a top gas in the hydrogen-based shaft furnace, and after the pressure equalization is completed, a valve below the middle hopper is opened, and after the roasted pellets completely enter the lower hopper, the valve below the middle hopper is closed, and then a valve below the lower hopper is opened for distributing the roasted pellets into the hydrogen-based shaft furnace.

The beneficial effects of the present disclosure are as follows:
1. according to the pre-reduced pellet preparation device and method provided by the present disclosure, a roasting process and a reduction process for a pellet are organically combined by utilizing a grate system, a rotary kiln system and a hydrogen-based shaft furnace reduction system, and a pellet cooling process after roasting and a heating process before reduction treatment are eliminated; physical heat of roasted pellets is used to meet the heat required in the heating and reduction processes; the technical problems of low hydrogen utilization rate and high energy consumption in oxidative roasting and direct reduction processes of pellets in traditional direct reduction processes are solved; reduced pellets having a certain metallization rate are obtained; the prepared pre-reduced pellets are used as blast furnace burden, such that fuel consumption and carbon emission of the blast furnace can be significantly reduced; and the method is a new, low-carbon, and green pre-reduced pellet preparation process;
2. according to the pre-reduced pellet preparation device and method provided by the present disclosure, by using pure hydrogen or hydrogen-rich gas for cooling reduction, the process is simpler and the energy utilization efficiency is improved;
3. according to the pre-reduced pellet preparation device and method provided by the present disclosure, the physical heat of the roasted pellet is used to meet the heat required for hydrogen reduction and gas heating, so that the thermodynamic condition of hydrogen reduction is more rationalized, and the hydrogen utilization rate is greatly improved; and
4. according to the pre-reduced pellet preparation device and method provided by the present disclosure, the whole process preferably adopts combustion of non-fossil energy sources such as pyrolysis gas, pyrolysis oil, biomass oil, and biomass carbon, green electric-driven equipment, and pure hydrogen or hydrogen-rich gas reduction, so that the production of pre-reduced pellets by a carbon-free or low-carbon process can be realized; and using the pre-reduced pellets in a conventional blast furnace or converter can greatly reduce carbon emissions in iron and steel smelting processes.

### BRIEF DESCRIPTION OF THE DRAWINGS

Other features, objects and advantages of the present disclosure will become more apparent by reading the detailed description of non-limiting embodiments with reference to the following drawings:

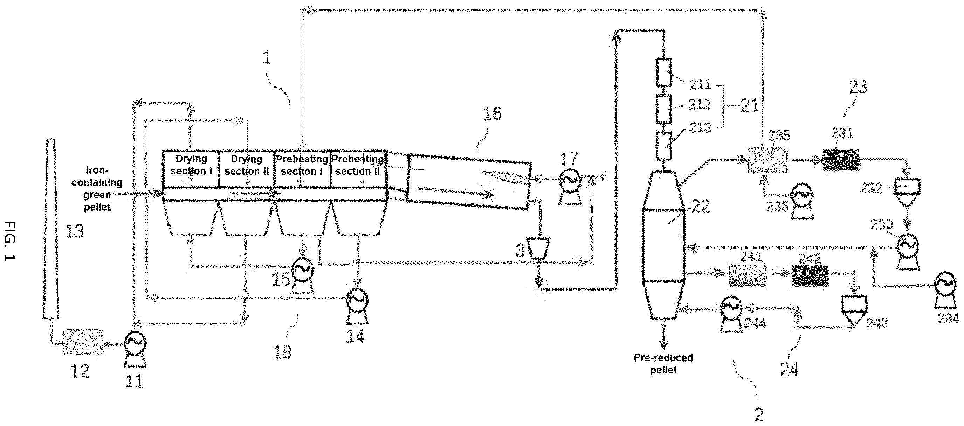

FIG. 1 is a schematic structural diagram of a pre-reduced pellet preparation device according to the present disclosure.

### DETAILED DESCRIPTION

In order to better understand the above technical solutions of the present disclosure, the technical solutions of the present disclosure are further illustrated below in conjunction with the accompanying drawings and the embodiments.

With reference to FIG. 1, the pre-reduced pellet preparation device provided by the present disclosure includes a grate-rotary kiln pellet oxidation system 1 and a hydrogen-based shaft furnace reduction system 2;
with reference to FIG. 1, the grate-kiln pellet oxidation system 1 includes a grate system 18, and a rotary kiln system 16 connected to the grate system 18, and is used for sequentially drying, preheating and high-temperature roasting iron-containing green pellets; and
with reference to FIG. 1, the grate system 18 sequentially dries and preheats the iron-containing green pellets to obtain preheated pellets, wherein the grate system 18 is provided with drying section I, drying section II, preheating section I and preheating section II in sequence in the direction of movement of the green pellets, the preheating section II communicates with the rotary kiln system 16, and the preheating section II is connected with the drying section II through a first recuperation fan 14; the preheating section I is connected with a tubular heat exchanger 235 of a reducing gas system 23, and the preheating section I is connected with the rotary kiln system 16 through a combustion fan 17, and is connected with the drying section I through a second recuperation fan 15; and the drying section I and the drying section II are each connected with a bag dust collector 12 through a main exhaust fan 11. The rotary kiln system 16 is used for high temperature roasting of the preheated pellets in the grate system 18, the rotary kiln system 16 uses a burner to burn fuel to provide the heat required in the high temperature roasting process, and the roasted pellets obtained after roasting in the grate-rotary kiln pellet oxidation system 1 are conveyed into a feeding system of the hydrogen-based shaft furnace reduction system 2 through a high-temperature-resistant tank.

With reference to FIG. 1, the hydrogen-based shaft furnace reduction system 2 includes a hydrogen-based shaft furnace 22, a feeding system 21, a reducing gas system 23, a cooling system 24, and a discharging system, and is used for reducing the roasted pellets obtained by roasting in the grate-rotary kiln pellet oxidation system 2; the feeding system 21 is disposed at the upper part of the hydrogen-based shaft furnace 22, and receives the roasted pellets from the rotary kiln system 16; the reducing gas system 23 provides reducing gas to the hydrogen-based shaft furnace 22, and in addition, the reducing gas system 23 can also treat flue gas generated by a reduction reaction in the hydrogen-based shaft furnace 22, and reduce the roasted pellets from the feeding system 21 in the hydrogen-based shaft furnace 22 to obtain pre-reduced pellets; the cooling system 24 provides a cooling gas, performs cooling treatment on the pre-reduced pellets obtained in the hydrogen-based shaft furnace 22 to obtain cooled pre-reduced pellets, and can further treat a mixed gas generated after cooling; and the discharge system is disposed at the bottom of the hydrogen-based shaft furnace 22 for discharging the cooled pre-reduced pellets.

With reference to FIG. 1, the feeding system 21 includes an upper hopper 211, a middle hopper 212 and a lower hopper 213; in order to maintain a closed environment in each part of the hopper, valves are disposed between the upper hopper 211 and the middle hopper 212, and between the middle hopper 212 and the lower hopper 213; in a specific embodiment, after the upper hopper 211 is filled with the roasted pellets (of up to 1200°C), in order to ensure that the oxygen content in the upper hopper 211 is 1% or less, the upper hopper 211 is further provided with an air duct to facilitate the introduction of steam (preferably at a high-temperature and a high-pressure) or nitrogen (preferably at a high-temperature and a high-pressure) to replace oxygen in air. In order to ensure pressure equalization in the middle hopper, the middle hopper 212 is provided with a pressure-equalizing device. A pressure equalization process can be completed by using a gas having the same composition as that of the top gas in the shaft furnace. To facilitate distribution of the roasted pellets into the hydrogen-based shaft furnace 22, a universal distributor is disposed under the lower hopper 213.

With reference to FIG. 1, the reducing gas system 23 is used for providing the reducing gas required for the reduction reaction to the hydrogen-based shaft furnace 22, and includes a tubular heat exchanger 235, a residual heat boiler 231, a first scrubber 232, a circulating fan 233 and a pressurizing fan 234; the tubular heat exchanger 235 is provided with a flue gas inlet, a flue gas outlet, an air inlet and an air outlet, wherein the flue gas inlet is connected with a flue gas port at the top of the hydrogen-based shaft furnace 22, and the flue gas outlet is connected with the residual heat boiler 231; the air inlet is connected with a heat exchange fan 236, and the air outlet is connected with the preheating section I of the grate system 18; the other end of the residual heat boiler 231 is connected with an air inlet of the first scrubber 232, one end of the circulating fan 233 communicates with an air outlet of the first scrubber 232, and the other end of the circulating fan 233 communicates with an annular tuyere in the middle part of the hydrogen-based shaft furnace 22; the pressurizing fan 234 pressurizes reducing gas from the circulating fan 233; in a specific use, the reducing gas enters from the annular tuyere of the hydrogen-based shaft furnace 22, and contacts with the roasted pellets from the feeding system 21 in the middle part of the hydrogen-based shaft furnace 22, being heated by the roasted pellets (absorbing the heat of the roasted pellets to cool the roasted pellets) while undergoing a reduction reaction with the roasted pellets, and after the reaction, the reducing gas flows out from the flue gas outlet at the top of the hydrogen-based shaft furnace 22 and is subjected to heat-exchange in the tubular heat exchanger 235, waste heat recovery in the residual heat boiler 231, scrubbing in the first scrubber 232, and then goes through the annular tuyere under the action of the circulating fan 233 and the pressurizing fan 234 to participate in the reduction reaction.

With reference to FIG. 1, the cooling system 24 includes a oxygenating combustion unit 241, a waste heat recovery unit 242, a second scrubber 243 and a cooling fan 244 wherein the oxygenating combustion unit 241 is connected with an air outlet at the lower part of the hydrogen-based shaft furnace 22; one end of the waste heat recovery unit 242 is connected with the oxygenating combustion unit 241, and the other end is connected with an air inlet of the second scrubber 243; one end of the cooling fan 244 is connected with an air outlet of the second scrubber 243, and the other end communicates with an air inlet at the lower part of the hydrogen-based shaft furnace 22; wherein the air outlet at the lower part of the hydrogen-based shaft furnace is arranged above the air inlet at the lower part of the hydrogen-based shaft furnace; in a specific use, cooling gas enters the hydrogen-based shaft furnace 22 from the air inlet at the lower part of the hydrogen-based shaft furnace, and cools the pre-reduced pellets after the reduction reaction at the lower part of the hydrogen-based shaft furnace 22, and a mixed gas after the cooling treatment is subjected to oxygenating combustion in the oxygenating combustion unit 241, waste heat recovery in the waste heat recovery unit 242, and scrubbing in the second scrubber 243, and then goes through the air inlet at the lower part of the hydrogen-based shaft furnace 22 under the action of the cooling fan 244 to participate in cooling treatment.

The discharging system discharges the cooled pre-reduced pellets.

With reference to FIG. 1, a pre-reduced pellet preparation method provided by the present disclosure uses the above pre-reduced pellet preparation device, wherein iron-containing green pellets are fed into the grate-kiln pellet oxidation system 18 to be roasted at a high-temperature, and then directly fed into the hydrogen-based shaft furnace reduction system 2 for reduction. The method specifically includes the following steps:
(1) bentonite and finely ground limestone/slaked lime are blended into an iron ore raw material to obtain a mixed material, then the mixed material is mixed with water, and pelletizing is performed to obtain iron-containing green pellets;
   wherein one or more of magnetite, hematite, and limonite having a Blaine specific surface area of 1500 cm²/g or more after ball milling or high-pressure roll milling pre-treatment are mixed to obtain the iron ore raw material, and then bentonite is blended, and finely ground limestone or slaked lime is added to obtain a mixed material with a binary alkalinity (CaO/SiO₂) of 0.3-0.5 or 0.8-1.2, wherein the amount of bentonite blended is 0.7-1.5 wt% of the iron ore raw material, and the binary alkalinity of the mixed material is adjusted by using the finely ground limestone or slaked lime according to actual use situation; an appropriate amount of water is then added, and pelletizing is performed in a disc pelletizer or a drum pelletizer to obtain iron-containing green pellets having a particle size of 8-20 mm.
(2) the iron-containing green pellets are charged into the grate system 18, and sequentially subjected to blast drying, exhaust drying, primary preheating, and secondary preheating to obtain preheated pellets, and then the preheated pellets are fed into the rotary kiln system 16 to be roasted at a high temperature of 1170-1300°C to obtain roasted pellets;
   wherein the iron-containing green pellets prepared in the step (1) are distributed into the grate system 18 through a conventional distribution device to obtain a material layer of iron-containing green pellets with a total height of 250-400 mm; the material layer of iron-containing green pellets is then sequentially subjected to blast drying, exhaust drying, primary preheating, and secondary preheating through drying section I, drying section II, preheating section I, and preheating section II of the grate system 18 to obtain preheated pellets, and then the preheated pellets are roasted in the rotary kiln system 16 by using a burner to combust a combustible substance to provide heat to obtain roasted pellets;
   wherein the blast drying is carried out in the drying section I, by using hot exhaust gas from the preheating section I and blowing it into the iron-containing green pellets from the bottom of the layer of the iron-containing green pellets and through the second recuperation fan 15, and the blast drying is carried out at a temperature controlled to be 170-240°C, preferably 190-210°C, at an air speed of 0.8-1.4 m/s, preferably 0.9-1.2 m/s, for time of 1.5-2.5 min;
   and wherein the exhaust drying is carried out in the drying section II, by using hot exhaust gas from the preheating section II introduced into a position above the surface of the layer of the pellets having been subjected to the above blast drying by a first recuperation fan 14, wherein the exhaust drying temperature is regulated according to the explosion temperature of the green pellets, and is controlled to be below the explosion temperature of the pellets, and the exhaust drying is carried out at a temperature of 300-400°C, preferably 330-350°C, and an air speed of 0.8-1.4 m/s, preferably 0.9-1.2 m/s, for a time of 4-6 min;
   the primary preheating is carried out in the preheating section I, and hot air is obtained by indirect heat exchange between air and flue gas after the reduction reaction in the tubular heat exchanger 235 of the reducing gas system 23. The primary preheating is carried out at a temperature of 600-800°C, and an air speed of 0.8-1.4 m/s, preferably 0.9-1.2 m/s, for a time of 4-6 min; and
   the secondary preheating is carried out in the preheating section II, and as hot air, hot exhaust gas generated by roasting in a rotary kiln is used. The secondary preheating is carried out at a temperature controlled to be 900-1100°C, and an air speed of 0.8-1.4 m/s, preferably 0.9-1.2 m/s, for a time of 4-6 min.

The roasting is carried out in the rotary kiln system 16, and uses heat provided through combustion of fuel at the burner, wherein the fuel may be a combustible oil or a combustible gas, including natural gas, coke oven gas, pyrolysis gas, pyrolysis oil, biomass oil, or biomass carbon, and is preferably a gas from non-fossil energy sources, such as pyrolysis gas, pyrolysis oil or biomass oil, and in order to increase the combustion temperature, hot air is used to support combustion, wherein the hot air is from a mixed gas composed of air and hot exhaust gas from the preheating section I. The roasting is carried out at a temperature controlled to be 1170-1300°C, for a time controlled to be 8-12 min, and the roasted pellets have a cold compressive strength of 2200 N/pellet or more.

In the grate system 18, after the iron-containing green pellets are subjected to blast drying and exhaust drying, exhaust gas passes through the main exhaust fan 11, the bag dust collector 12 and the dust removal, desulfurization and denitrification system, and is discharged through a chimney 13 after meeting the ultra-low emission standard.

(3) the roasted pellets enter a hydrogen-based shaft furnace reduction system, and undergo a reduction reaction with reducing gas, and are cooled with cooling gas to obtain cooled pre-reduced pellets, wherein the roasted pellets enter the feeding system 21 of the hydrogen-based shaft furnace reduction system 2 through a high-temperature-resistant tank, and then enter the hydrogen-based shaft furnace 22 of the hydrogen-based shaft furnace reduction system 2 through the feeding system 21, a reduction reaction is carried out in the middle part of the hydrogen-based shaft furnace 22, and cooling treatment is performed in the lower part of the hydrogen-based shaft furnace 22 after the reduction reaction to obtain cooled pre-reduced pellets; wherein flue gas after the reduction reaction enters the reducing gas system 23 from a flue gas outlet at the top of the hydrogen-based shaft furnace 22, and is subjected to heat exchange, waste heat recovery, and scrubbing, and then enters the middle part of the hydrogen-based shaft furnace 22 through the reducing gas system 23 to participate in a reduction reaction; and a mixed gas after the cooling treatment enters a cooling system 24 from an air outlet at the lower part of the hydrogen-based shaft furnace 22, undergoes oxygenating combustion, waste heat recovery, and scrubbing, and then enters the lower part of the hydrogen-based shaft furnace 22 through the cooling system 24 to participate in cooling treatment; for details, the step (3) comprises the following substeps:
(3.1) distribution: the roasted pellets prepared in the step (2) are introduced into the feeding system 21 of the hydrogen-based shaft furnace reduction system 2 through the high-temperature-resistant tank, sequentially enter the upper hopper 211, the middle hopper 212 and the lower hopper 213 of the feeding system 21, and then are distributed into the hydrogen-based shaft furnace 22, and during the process, after the roasted pellets are loaded into the upper hopper 211, replacement is performed by introducing steam (preferably at a high-temperature and high-pressure) or nitrogen (preferably at a high-temperature and high-pressure), such that the oxygen content within the upper hopper 211 is 1% or less, and then a valve below the upper hopper 211 is opened, after the roasted pellets completely enter the middle hopper 212, and thereafter, the valve under the upper hopper 211 is closed, and a pressure equalization process is completed by using a gas having the same composition as that of the top gas in the hydrogen-based shaft furnace 22, and after the pressure equalization is completed, a valve below the middle hopper 212 is opened, and after the roasted pellets completely enter the lower hopper 213, the valve under the middle hopper 212 is closed, and a valve below the lower hopper 213 is opened for distributing the roasted pellets into the hydrogen-based shaft furnace 22 through a universal distributor.
(3.2) reduction reaction: the roasted pellets undergo a reduction reaction in the middle part of the hydrogen-based shaft furnace 22, wherein reducing gas is pure hydrogen or coke oven gas, preferably pure hydrogen; the reducing gas enters the hydrogen-based shaft furnace 22 from an annular tuyere in the middle part of the hydrogen-based shaft furnace 22, and contacts with hot roasted pellets of about 500°C, the reducing gas is heated by the roasted pellets (absorbing the heat of the roasted pellets and thus cooling the roasted pellets) while undergoing a reduction reaction with the roasted pellets, and as the reducing gas rises, its concentration gradually decreases, however, since the temperature of the roasted pellets increases gradually, the reduction reaction has been going on, and after the flue gas subjected to the reduction reaction is discharged from the flue gas outlet at the top of the hydrogen-based shaft furnace 22, the temperature of the flue gas is raised to 1000°C or above by heating; the flue gas is further subjected to heat exchange in the tubular heat exchanger 235 (primary preheating is performed with the physical heat of the top gas), waste heat recovery in the residual heat boiler 231, scrubbing in the first scrubber 232 to remove H₂O and dust from the flue gas. Alternatively, a small amount of ammonia water may be sprayed into the first scrubber 232 to remove CO₂ and SO₂ from the flue gas according to process requirements, so that the flue gas becomes a high reduction potential gas mainly composed of H₂ and CO after a simple scrubbing treatment, and the resulting reducing gas participates in the reduction reaction again through the circulating fan 233; during the reduction reaction, the consumption of the reducing gas is 800-1200 m³/t, the reduction reaction time is 40-100 min, and the pressure of the hydrogen-based shaft furnace 22 of the hydrogen-based shaft furnace reduction system 2 is controlled to be 200-250 kPa.
(3.3) cooling treatment: the roasted pellets after the reduction reaction are subjected to cooling treatment with cooling gas in the lower part of the hydrogen-based shaft furnace 22, the mixed gas after the cooling treatment enters the cooling system 24 from the air outlet at the lower part of the hydrogen-based shaft furnace 22, undergoes oxygenating combustion, waste heat recovery, and scrubbing, and then goes through the cooling system 24 and enters the hydrogen-based shaft furnace 22 from the air inlet in the lower part of the hydrogen-based shaft furnace 22 to participates in the cooling treatment again; in the cooling treatment, nitrogen and a small amount of natural gas are used, and while cooling, sponge iron (DRI) contained in the reduced material can catalyze CH₄ cracking, and a small amount of Fe₃C is formed, so that a carburization process is completed to prevent the DRI from being re-oxidized; in the above process, the cooling gas has a flow rate of 1200-1800 m³/t, and a small amount of H₂ will bring out by the cooling gas in the process of cooling the pellets; in order to ensure safety, the mixed gas is subjected to oxygenating combustion, followed by waste heat utilization, and H₂O is then removed by a scrubber to obtain a mixed gas containing N₂ and a small amount of CO₂, and the mixed gas is recycled; and the final discharges from the hydrogen-based shaft furnace 22 are cooled pre-reduced pellets, which are discharged at a temperature of less than 150°C, and the metallization rate of the product is determined according to the requirements of the subsequent process.

In the pre-reduced pellet preparation method described above, the metallization rate of the prepared pre-reduced pellets is 40% or more, and the hydrogen utilization rate is up to 40% or more. In a preferred embodiment, the metallization rate of the pre-reduced pellets is 40-62%, and the hydrogen utilization rate is up to 50% or more.

The pre-reduced pellet preparation device and method of the present disclosure are further described below with reference to specific examples; and the pre-reduced pellet preparation device and method in the following embodiments employ the device and method described above.

### Examples 1-5

The iron ore raw materials in Examples 1-5 are as shown in Table 1. Bentonite and finely ground limestone are blended into the iron ore raw materials to obtain a mixed material, the mixed material is then mixed with water, and the obtained mixture is pelletized to obtain iron-containing green pellets, and then the iron-containing green pellets are transferred into a grate system to be sequentially subjected to blast drying, exhaust drying, primary preheating, and secondary preheating to obtain preheated pellets, and then the preheated pellets enter a rotary kiln system to be roasted to obtain roasted pellets. The roasting parameters are shown in Table 1 below.

**Table 1 Iron ore raw material and processing parameters**

| | Iron ore raw materials | blast drying | | exhaust drying | | Primary preheating | | Secondary preheating | | Roasting | | Compressive strength of roasted pellet (N/number) |
|---|---|---|---|---|---|---|---|---|---|---|---|---|
| | hematite: magnetite: limonite | Temp. (°C) | Time (min) | Temp. (°C) | Time (min) | Temp. (°C) | Time (min) | Temp. (°C) | Time (min) | Temp. (°C) | Time (min) | |
| Example 1 | 75:20:5 | 200 | 2 | 330 | 4 | 680 | 5 | 1040 | 5 | 1230 | 12 | 2936 |
| Example 2 | 60:40:0 | 215 | 2 | 350 | 4 | 670 | 4 | 980 | 6 | 1210 | 10 | 2568 |
| Example 3 | 80:20:0 | 210 | 2 | 340 | 4 | 700 | 4 | 1050 | 5 | 1250 | 10 | 2644 |
| Example 4 | 75:15:10 | 210 | 2 | 340 | 4 | 720 | 4 | 1030 | 5 | 1230 | 9 | 2564 |
| Example 5 | 80:15:5 | 210 | 2 | 340 | 4 | 660 | 4 | 1060 | 5 | 1260 | 10 | 2708 |

The roasted pellets are transferred into a hydrogen-based shaft furnace reduction system for reduction, and after reduction using pure hydrogen or coke oven gas, the pellets are cooled by nitrogen and methane, and carburized to obtain pre-reduced pellets. The reduction parameters are as shown in Table 2 below.

**Table 2 Pre-reduced pellets and reduction parameters**

| | Reducing gas composition (H₂: CO: CH₄) | Reducing gas consumption (m³/t) | Reduction end temperature (°C) | H₂ utilization rate (%) | Metallization rate of pre-reduced pellet (%) |
|---|---|---|---|---|---|
| Example 1 | 100: 0: 0 | 980 | 450 | 50 | 62 |
| Example 2 | 100: 0: 0 | 850 | 560 | 61 | 54 |
| Example 3 | 100: 0: 0 | 1000 | 650 | 65 | 60 |
| Example 4 | 100: 0: 0 | 850 | 500 | 55 | 56 |
| Example 5 | 60: 15: 25 | 1000 | 500 | 42 | 40 |

In Example 1, the iron-containing green pellets have a binary alkalinity of 1.0, and by using the processing parameters shown in Table 1, the obtained roasted pellets have a high cold compressive strength. The roasted pellets were cooled and reduced by introducing pure hydrogen, with a hydrogen utilization rate of 50%. The pre-reduced pellets obtained after cooling have a metallization rate is up to 62%.

In Example 2, the iron-containing green pellets have a binary alkalinity of 0.3, and by using the processing parameters shown in Table 1, the preheating temperature and the roasting temperature were suitably reduced due to the high ratio of magnetite. The roasted pellets were cooled and reduced by introducing pure hydrogen, with a hydrogen utilization rate of 61%. The metallization rate of the pre-reduced pellets obtained after cooling is up to 54%.

In Example 3, the iron-containing green pellets have a binary alkalinity of 0.9. By using the processing parameters shown in Table 1, the roasted pellets were cooled and reduced by introducing pure hydrogen, with a hydrogen utilization rate of 65%. The metallization rate of the pre-reduced pellets obtained after cooling is up to 60%.

In Example 4, the iron-containing green pellets have a binary alkalinity of 0.4. By using the processing parameters shown in Table 1, the preheating temperature and the roasting temperature were suitably reduced due to the reduced amount of an alkaline flux (finely ground limestone) blended, and the roasted pellets were cooled and reduced by introducing pure hydrogen, with a hydrogen utilization rate of 55%. The metallization rate of the pre-reduced pellets obtained after cooling is up to 56%.

In Example 5, the iron-containing green pellets have a binary alkalinity of 1.0, and by using the processing parameters shown in Table 1, the obtained roasted pellets have a high cold compressive strength. The roasted pellets were cooled and reduced by introducing coke oven gas. The hydrogen utilization rate is relatively lower than that when pure hydrogen is used due to occurrence of water gas reaction between CO, CH₄ and H₂O at a high temperature. The hydrogen utilization rate in this example is only 42%. The metallization rate of the pre-reduced pellets is up to 51%.

In summary, according to the pre-reduced pellet preparation device and method based on a grate-rotary kiln provided by the present disclosure, a roasting process and a reduction process for a pellet are organically combined by utilizing a grate system, a rotary kiln system and a hydrogen-based shaft furnace reduction system, and a cooling process of pellets after roasting and a heating process of pellets before reduction are eliminated; the physical heat of roasted pellets is used to meet heat required in the heating and reduction processes; the technical problems of low hydrogen utilization rate and high energy consumption in oxidative roasting and direct reduction processes of pellets in traditional direct reduction processes are solved; reduced pellets having a certain metallization rate are obtained; the prepared pre-reduced pellets are used as blast furnace burden, such that blast furnace fuel consumption and carbon emission can be significantly reduced; and the method is a new, low-carbon, and green pre-reduced pellet preparation process; by using pure hydrogen or hydrogen-rich gas for cooling reduction, the process is simpler and the energy utilization efficiency is improved; the physical heat of the roasted pellets is used to meet the heat required for hydrogen reduction and gas heating, so that the thermodynamic conditions of hydrogen reduction are more rationalized, and the hydrogen utilization rate is greatly improved; and the whole process preferably adopts combustion of non-fossil energy sources such as pyrolysis gas, pyrolysis oil, biomass oil, and biomass carbon, green electric driven equipment, and pure hydrogen or hydrogen-rich gas reduction, so that the production of pre-reduced pellets by a carbon-free or low-carbon process can be realized; and using the pre-reduced pellets in a conventional blast furnace or converter can greatly reduce the carbon emissions from iron and steel smelting processes.

Those of ordinary skill in the art should recognize that the above embodiments are merely illustrative of the present disclosure and are not to be construed as limiting the present disclosure, and that variations and modifications of the above embodiments are intended to fall within the scope of the appended claims of the present disclosure as long as they are within the true spirit of the present disclosure.

## Claims

1. A pre-reduced pellet preparation device, comprising a grate-rotary kiln pellet oxidation system and a hydrogen-based shaft furnace reduction system;
the grate-rotary kiln pellet oxidation system comprises a grate system, and a rotary kiln system connected to the grate system; in the grate system, iron-containing green pellets are sequentially dried and preheated to obtain preheated pellets, and in the rotary kiln system, the preheated pellets are roasted at a temperature of 1170-1300°C to obtain roasted pellets; and
the hydrogen-based shaft furnace reduction system comprises a hydrogen-based shaft furnace, a feeding system, a reducing gas system, a cooling system, and a discharging system; the feeding system is disposed at the upper part of the hydrogen-based shaft furnace, and the roasted pellets from the rotary kiln system are directly conveyed into the feeding system; the reducing gas system processes flue gas from the hydrogen-based shaft furnace, and provides reducing gas to the hydrogen-based shaft furnace; the roasted pellets from the feeding system are reduced in the hydrogen-based shaft furnace to obtain pre-reduced pellets; the cooling system cools the pre-reduced pellets in the hydrogen-based shaft furnace to obtain cooled pre-reduced pellets; and the discharging system is disposed at the bottom of the hydrogen-based shaft furnace, and discharges the cooled pre-reduced pellets.

2. The pre-reduced pellet preparation device according to claim 1, **characterized in that** the grate system is provided with a drying section I, a drying section II, a preheating section I and a preheating section II in sequence in a direction of movement of the iron-containing green pellets;
the preheating section II communicates with the rotary kiln system, and is connected with the drying section II through a first recuperation fan;
the preheating section I is connected with a tubular heat exchanger of the reducing gas system, and is connected with the rotary kiln system through a combustion fan, and is connected with the drying section I through a second recuperation fan; and
the drying section I and the drying section II are each connected to a bag dust collector through a main exhaust fan.

3. The pre-reduced pellet preparation device according to claim 2, **characterized in that** the feeding system comprises an upper hopper, a middle hopper and a lower hopper; valves are disposed between the upper hopper and the middle hopper, and between the middle hopper and the lower hopper; and/or
the reducing gas system comprises a tubular heat exchanger, a residual heat boiler, a first scrubber, a circulating fan, and a pressurizing fan; the tubular heat exchanger is provided with a flue gas inlet, a flue gas outlet, an air inlet and an air outlet, and the flue gas inlet is connected with a flue gas port at the top of the hydrogen-based shaft furnace, the flue gas outlet is connected with the residual heat boiler, the air inlet is connected with a fan, the air outlet is connected with the preheating section I of the grate system; an air outlet of the residual heat boiler is connected with an air inlet of the first scrubber; one end of the circulating fan is connected with an air outlet of the first scrubber, and the other end communicates with an annular tuyere in the middle part of the hydrogen-based shaft furnace; the pressurizing fan pressurizes reducing gas from the circulating fan; and/or
the cooling system comprises a oxygenating combustion unit, a waste heat recovery unit, a second scrubber, and a cooling fan; the oxygenating combustion unit is connected with an air outlet at a lower part of the hydrogen-based shaft furnace; one end of the waste heat recovery unit is connected with the oxygenating combustion unit, and the other end is connected with an air inlet of the second scrubber; one end of the cooling fan is connected with an air outlet of the second scrubber, and the other end communicates with an air inlet at the lower part of the hydrogen-based shaft furnace; and the air outlet at the lower part of the hydrogen-based shaft furnace is arranged above the air inlet at the lower part of the hydrogen-based shaft furnace.

4. The pre-reduced pellet preparation device according to claim 3, **characterized in that** the upper hopper is provided with an air duct; the middle hopper is provided with a pressure-equalizing device; and the lower hopper is provided with a universal distributor.

5. A pre-reduced pellet preparation method, comprising preparing pre-reduced pellets by using the pre-reduced pellet preparation device according to any one of claims 1-4, roasting the pellets at a temperature of 1170-1300°C in a grate-rotary kiln pellet oxidation system of the pre-reduced pellet preparation device to obtain roasted pellets having a temperature of 1170-1300°C, and then directly feeding the roasted pellets into a hydrogen-based shaft furnace reduction system of the pre-reduced pellet preparation device for reduction to obtain pre-reduced pellets.

6. The pre-reduced pellet preparation method according to claim 5, **characterized in** comprising the steps of:
(1) blending bentonite and finely ground limestone/slaked lime into an iron ore raw material to obtain a mixed material, then mixing water into the mixed material, and pelletizing them to obtain iron-containing green pellets;
(2) distributing the iron-containing green pellets into a grate system to form a material layer of iron-containing green pellets, sequentially subjecting the material layer of iron-containing green pellets to blast drying, exhaust drying, primary preheating, and secondary preheating to obtain preheated pellets, then feeding the preheated pellets into a rotary kiln system, and performing roasting at 1170-1300°C to obtain roasted pellets with a temperature of 1170-1300°C; and
(3) feeding the roasted pellets into a hydrogen-based shaft furnace reduction system, so that the roasted pellets undergo a reduction reaction with reducing gas, and then performing cooling treatment with cooling gas to obtain pre-reduced pellets.

7. The pre-reduced pellet preparation method according to claim 6, **characterized in that** in the step (1), the iron ore raw material is selected from one or more of magnetite, hematite and limonite; and/or
the iron ore raw material has a Blaine specific surface area of 1500 cm²/g or more; and/or
the amount of the bentonite blended is 0.7-1.5 wt% of the iron ore raw material; and/or
the mixed material has a binary alkalinity of 0.3-0.5 or 0.8-1.2; and/or
the iron-containing green pellets have a particle size of 8-20 mm; and/or
in the step (2), in the grate system, the material layer of iron-containing green pellets has a height of 250-400 mm; and/or
the blast drying is carried out in the drying section I of the grate system at a temperature of 170-240°C and an air speed of 0.8-1.4 m/s for 1.5-2.5 min; and/or
the exhaust drying is carried out in the drying section II of the grate system at a temperature of 300-400°C and an air speed of 0.8-1.4 m/s for 4-6 min; and/or
the primary preheating is carried out in the preheating section I of the grate system at a temperature of 600-800°C and an air speed of 0.8-1.4 m/s for 4-6 min; and/or
the secondary preheating is carried out in the preheating section II of the grate system at a temperature of 900-1100°C and an air speed of 0.8-1.4 m/s for 4-6 min; and/or
the fuel used in the rotary kiln system comprises natural gas, coke oven gas, pyrolysis gas, pyrolysis oil, biomass oil, or biomass carbon; and/or
the rotary kiln system uses hot air to support combustion, and the hot air is from a mixed gas composed of air and hot exhaust gas of the grate system; and/or
in the process of the roasting, the roasting is carried out for a time of 8-12 min; and/or
in the step (3), the hydrogen-based shaft furnace of the hydrogen-based shaft furnace reduction system has a pressure of 200-250 kPa; and/or
the reducing gas is pure hydrogen or coke oven gas; and/or
during the reduction reaction, the consumption amount of the reducing gas is 800-1200 m³/t, and the reduction reaction is carried out for a time of 40-100 min; and/or
the cooling gas comprises nitrogen and natural gas; and/or
during the cooling treatment, the cooling gas has a flow rate of 1200-1800 m³/t; and/or
the pre-reduced pellets is discharged at a temperature of lower than 150°C; and
the metallization rate of the pre-reduced pellets is 40% or more.

8. The pre-reduced pellet preparation method according to claim 7, **characterized in that** in the step (2), in the process of the blast drying, the blast drying is carried out at a temperature of 190-210°C, and an air speed of 0.9-1.2 m/s; and/or
in the process of the exhaust drying, the exhaust drying is carried out at a temperature of 330-350°C, and an air speed of 0.9-1.2 m/s; and/or
in the process of the primary preheating, the air speed is 0.9-1.2 m/s; and/or
in the process of the secondary preheating, the air speed is 0.9-1.2 m/s; and/or
in the step (3), the metallization rate of the pre-reduced pellets is 40-62%, and
the reducing gas is pure hydrogen, and during the reduction reaction, a hydrogen utilization rate reaches 50% or more.

9. The pre-reduced pellet preparation method according to claim 6, **characterized in that** in the step (3), the reducing gas is pure hydrogen, and during the reduction reaction, the hydrogen utilization rate reaches 55% or more; and/or
the roasted pellets are conveyed into the feeding system of the hydrogen-based shaft furnace reduction system through a high-temperature-resistant tank, and are then distributed into the hydrogen-based shaft furnace of the hydrogen-based shaft furnace reduction system through the feeding system, and participate in a reduction reaction in the middle part of the hydrogen-based shaft furnace;
the reducing gas enters the hydrogen-based shaft furnace through the reducing gas system to participate in the reduction reaction, and flue gas after the reduction reaction enters the reducing gas system from a flue gas outlet at the top of the hydrogen-based shaft furnace, and is subjected to heat exchange, waste heat recovery, and scrubbing, and then enters the middle part of the hydrogen-based shaft furnace to participate in the reduction reaction; and
the cooling gas enters the hydrogen-based shaft furnace through the cooling system to participate in the cooling treatment, and a mixed gas after the treatment enters the cooling system from an air outlet at the lower part of the hydrogen-based shaft furnace, and is subjected to oxygenating combustion, waste heat recovery, and scrubbing, and then enters the lower part of the hydrogen-based shaft furnace to participate in the cooling treatment.

10. The pre-reduced pellet preparation method according to claim 9, **characterized in that** in the step (3), distribution is carried out in the feeding system as follows:
the roasted pellets are introduced into the feeding system, pass through an upper hopper, a middle hopper and a lower hopper of the feeding system in sequence, and then are distributed into the hydrogen-based shaft furnace through a universal distributor;
after the roasted pellets are charged into the upper hopper, steam or nitrogen is introduced to replace oxygen such that the oxygen content within the upper hopper is 1% or less, and then a valve below the upper hopper is opened, so that the roasted pellets completely enter the middle hopper, and then the valve below the upper hopper is closed, and a pressure equalization process is completed by using a gas having the same composition as that of a top gas in the hydrogen-based shaft furnace, after the pressure equalization is completed, a valve below the middle hopper is opened, and after the roasted pellets completely enter the lower hopper, the valve below the middle hopper is closed, and then a valve below the lower hopper is opened for distributing the roasted pellets into the hydrogen-based shaft furnace.
